# FASCICULE DE BREVET EUROPEEN

(11) **EP 1 808 339 B1**
(45) Date de publication et mention de la délivrance du brevet: **09.04.2008**
(21) Numéro de dépôt: 06300034.3
(22) Date de dépôt: 17.01.2006
(51) Int. Cl.: B60R 21/01

(54) **Dispositif d'acquisition de l'état d'un capteur d'un siège de véhicule**
Erfassungsvorrichtung vom Zustand eines Sensors in einem Fahrzeugssitz
Acquisition device of a state of a sensor in a vehicle seat

(43) Date de publication de la demande: 18.07.2007
(73) Titulaire: Delphi Technologies, Inc., Troy, MI 48007 (US)
(72) Inventeur: Poitelon, Olivier, 91540, Mennecy (FR); Sinope, Yannis, 95800, Cergy (FR); Marier, Nicolas, 77410, Fresnes sur Marne (FR); Deroubaix, Nicolas, 94120, Fontenay Sous Bois (FR)
(74) Mandataire: Laget, Jean-Loup

(56) Documents cités:
- EP-A- 0 827 871
- WO-A-20/04098943
- DE-A1- 10 161 898
- DE-A1- 19 545 220
- US-A- 5 954 390
- US-B1- 6 184 785

## Description

La présente invention a pour objet un dispositif d'acquisition de l'état d'un capteur d'un siège de véhicule.

Il est souvent très utile d'incorporer dans un siège de véhicule un ou plusieurs capteurs, par exemple sous la forme d'interrupteurs, qui sont utilisés pour détecter une information relative à l'utilisation du siège. Par exemple, un interrupteur détecteur de poids peut servir à indiquer la présence d'un occupant sur le siège. Un interrupteur détecteur de ceinture peut également être utilisé pour détecter si l'occupant du siège utilise ou non sa ceinture de sécurité. Les signaux obtenus à partir de tels capteurs peuvent être utilisés pour contrôler des dispositifs de sécurité ou de confort destinés à apporter une protection pour un occupant du siège en cas d'accident ou commander de manière efficace le déploiement de dispositifs de sécurité, par exemple un airbag.

Généralement, chaque interrupteur est connecté par des fils électriques à une unité centrale de commande du véhicule, qui commande le déploiement des dispositifs de sécurité du véhicule.

Cependant, un tel système présente l'inconvénient de nécessiter un grand nombre de fils électriques traversant le véhicule. De plus, lorsque le siège est un siège amovible, il n'est parfois pas possible, ou du moins compliqué, de disposer et de raccorder des fils électriques entre le ou les capteurs situés à l'intérieur du siège et l'unité centrale de commande qui est disposée de manière fixe par rapport au véhicule.

Le document EP 0 827 871 A divulgue le préambule de la revendication 1.

La présente invention a pour but de proposer un dispositif d'acquisition de l'état d'un capteur d'un siège de véhicule qui évite au moins certains des inconvénients précités et qui permette l'acquisition de l'état d'un capteur d'un siège de véhicule de manière simple et économique, y compris lorsque le siège est un siège amovible.

A cet effet, l'invention a pour objet un dispositif d'acquisition de l'état d'un capteur d'un siège de véhicule selon l'objet de la revendication 1.
- un dispositif d'interrogation agencé dans ledit véhicule, ledit dispositif d'interrogation comprenant un générateur de signal porteur apte à générer un signal porteur à une fréquence porteuse

De préférence, ledit dispositif de réponse comporte un redresseur pour alimenter ledit générateur de signal de réponse à partir dudit signal porteur. De cette manière, le dispositif de réponse ne nécessite pas l'utilisation d'une batterie séparée.

Avantageusement, ledit générateur de signal de réponse comporte un oscillateur à fréquence réglable et est apte à modifier la fréquence dudit signal de réponse en fonction de l'état dudit capteur.

Selon un mode de réalisation particulier de l'invention, ledit capteur est un interrupteur, ledit générateur de signal de réponse étant apte à produire un signal de réponse comprenant une première valeur caractéristique prédéterminée lorsque ledit interrupteur est dans un état ouvert et à produire un signal de réponse comprenant une deuxième valeur caractéristique prédéterminée, différente de ladite première valeur caractéristique prédéterminée, lorsque ledit interrupteur est dans un état fermé.

Selon un mode de réalisation particulier de l'invention, ledit interrupteur est disposé dans une boucle de ceinture, l'interrupteur étant apte à prendre un premier état lorsque la ceinture est attachée et un deuxième état lorsque la ceinture n'est pas attachée.

Avantageusement, ledit capteur comporte plusieurs interrupteurs, chaque interrupteur étant disposé dans une boucle de ceinture respectivement. Ce mode de réalisation permet, en utilisant un unique dispositif d'interrogation et un unique dispositif de réponse, de déterminer l'état de plusieurs ceintures du véhicule. Cela permet notamment de limiter le nombre de composants nécessaires.

Selon un autre mode de réalisation particulier de l'invention, ledit capteur est un capteur d'occupation du siège sensible au poids.

De préférence, ledit modulateur est apte à moduler en amplitude ledit signal porteur par ledit signal de réponse.

Avantageusement, la portée dudit signal porteur est inférieure à 10 cm. Un signal de courte portée permet d'éviter les risques d'interférence avec d'autres dispositifs du véhicule.

Selon un mode de réalisation de l'invention, ledit dispositif de réponse est agencé sous le siège dudit véhicule, ledit premier composant inductif étant agencé sous le siège du véhicule, la distance entre ledit premier composant inductif et ledit deuxième composant inductif étant inférieure à 10 cm, de préférence inférieure à 2,5cm.

De préférence, la distance entre ledit premier composant inductif et ledit plancher est supérieure à 5 mm.

Avantageusement, ledit premier composant inductif comporte un enroulement d'axe vertical par rapport audit véhicule, ledit deuxième composant inductif comportant un enroulement d'axe vertical par rapport audit véhicule, les axes verticaux desdits premier et deuxième composants inductifs étant sensiblement confondus.

Selon un mode de réalisation de l'invention, ledit véhicule comporte une unité centrale de commande apte à communiquer avec ledit dispositif de traitement pour commander le déploiement d'un dispositif de sécurité du véhicule en fonction de l'état de service du siège.

Avantageusement, ladite unité centrale de commande est apte à inhiber le déploiement d'un sac gonflable associé audit siège lorsque ledit capteur détecte un état de service dudit siège dans lequel ledit siège n'est pas occupé ou dans lequel une ceinture de sécurité dudit siège n'est pas attachée.

De préférence, ledit dispositif de réponse est réalisé sous la forme d'un circuit intégré, ledit circuit intégré étant inséré dans un boîtier, ledit boîtier comportant un connecteur pour permettre la connexion dudit dispositif de réponse avec ledit capteur, ledit boîtier comportant des moyens de fixation pour la fixation dudit boîtier sous ledit siège.

De préférence, le dispositif comprend un module de commande, ledit module de commande incluant ledit générateur, ledit démodulateur et ledit dispositif de traitement, ledit module de commande étant fixé à ladite traverse.

Selon un mode de réalisation de l'invention, ledit module de commande est inséré dans un boîtier étanche, ledit premier composant inductif étant inséré dans un boîtier étanche, lesdits boîtiers étant accrochés à ladite traverse.

Selon un autre mode de réalisation de l'invention, ledit module de commande est réalisé sous la forme d'un circuit intégré, ledit module de commande et ledit premier composant inductif étant accrochés à ladite traverse et étant recouverts d'une résine pour assurer l'étanchéité dudit dispositif d'interrogation. Ces modes de réalisation permettent une mise en place aisée du dispositif dans un véhicule grâce à l'intégration de ces composants sur une même pièce.

L'invention sera mieux comprise, et d'autre buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
Sur ces dessins :
- la figure 1 est une vue schématique partielle et en coupe longitudinale d'un véhicule, montrant un dispositif d'acquisition de l'état d'un capteur d'un siège du véhicule selon un mode de réalisation de l'invention ;
- la figure 2 est un schéma électrique du dispositif de réponse du dispositif d'acquisition de l'état d'un capteur de la figure 1 ;
- la figure 3 est est un schéma électrique du dispositif d'interrogation du dispositif d'acquisition de l'état d'un capteur de la figure 1 ;
- la figure 4 est un chronogramme illustrant un processus de communication entre le dispositif d'interrogation de la figure 3 et le dispositif de réponse de la figure 2 ;
- la figure 5 est une vue simplifiée en perspective d'une traverse pour la fixation du dispositif d'interrogation ;
- la figure 6 est une vue similaire à la figure 5 montrant une variante de réalisation de la traverse ;
- la figure 7 est une vue de la traverse de la figure 5 fixée sur le plancher du véhicule ;
- la figure 8 est une vue simplifiée en perspective montrant la face inférieure de la partie plane de la traverse ;
- la figure 9 est une vue simplifiée en coupe longitudinale d'un boîtier contenant le dispositif de réponse ; et
- la figure 10 est une vue simplifiée en perspective d'un boîtier contenant le circuit résonnant du dispositif d'interrogation de la figure 3.

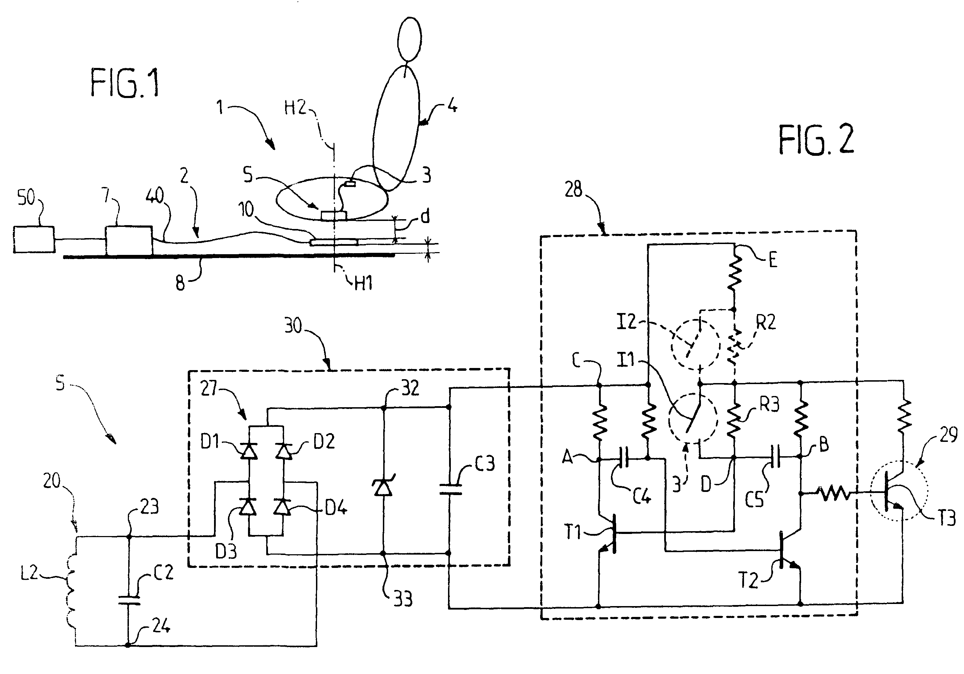

En se référant à la figure 1, on voit un véhicule 1 dont on a représenté uniquement la paroi de plancher 8 de l'habitacle ainsi qu'un siège 4, qui est attaché au corps du véhicule, par exemple au plancher 8, par des moyens de fixation non représentés, selon la technique connue. Par exemple, le siège 4 peut être un siège avant ou arrière amovible. Un capteur 3 est disposé dans le siège 4 du véhicule 1. Dans le mode de réalisation décrit, le capteur 3 est disposé dans la boucle de ceinture (non représentée) du siège 4 et permet de détecter si la ceinture (non représentée) est attachée ou non. Un dispositif d'acquisition de l'état du capteur 3 est désigné par le chiffre 2. Il comprend un dispositif de réponse 5, disposé sur ou sous ou dans le siège 4 et relié au capteur 3, et un dispositif d'interrogation 6, disposé de manière fixe par rapport au véhicule 1 et connecté à une unité centrale de commande 50 du véhicule 1. Le dispositif d'interrogation 6 est destiné à communiquer avec le dispositif de réponse 5, par couplage inductif, pour déterminer l'état du capteur 3.

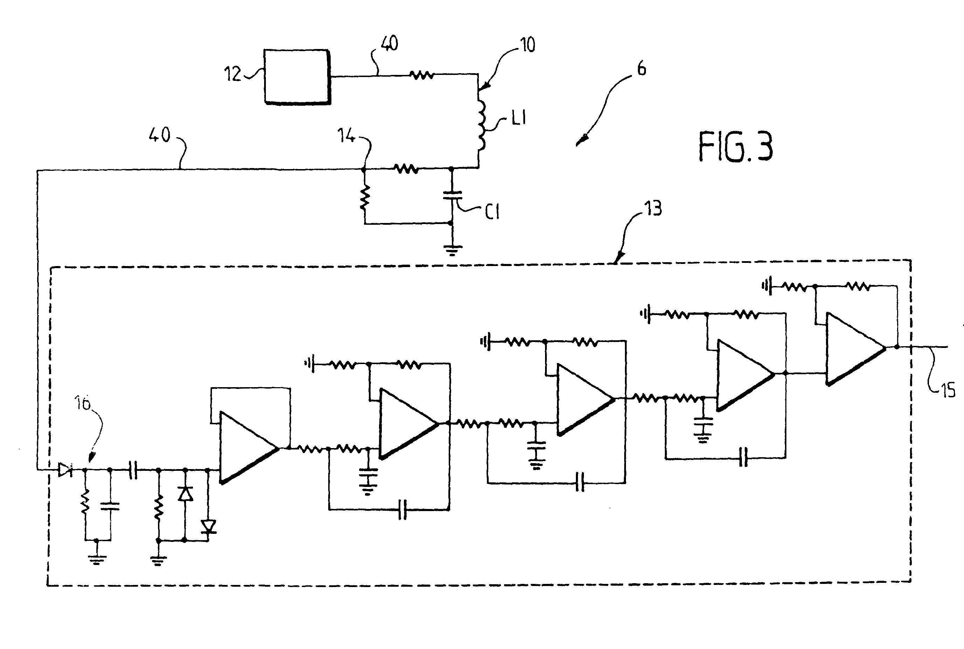

En se référant à la figure 3, on va maintenant décrire plus en détail le dispositif d'interrogation 6.

Le dispositif d'interrogation 6 comporte un circuit résonnant 10 comprenant une bobine L1, formant une antenne magnétique, et un condensateur C1. Le circuit résonnant 10 est disposé sous le siège 4, la bobine L1 étant une bobine d'axe vertical H1.

Le circuit résonnant 10 est relié par des fils électriques 40 à un générateur 12 et à des moyens de traitement du signal qui sont intégrés dans un module de commande 7. Le module de commande 7 est connecté à l'unité centrale 50 ou intégré dans l'unité centrale 50.

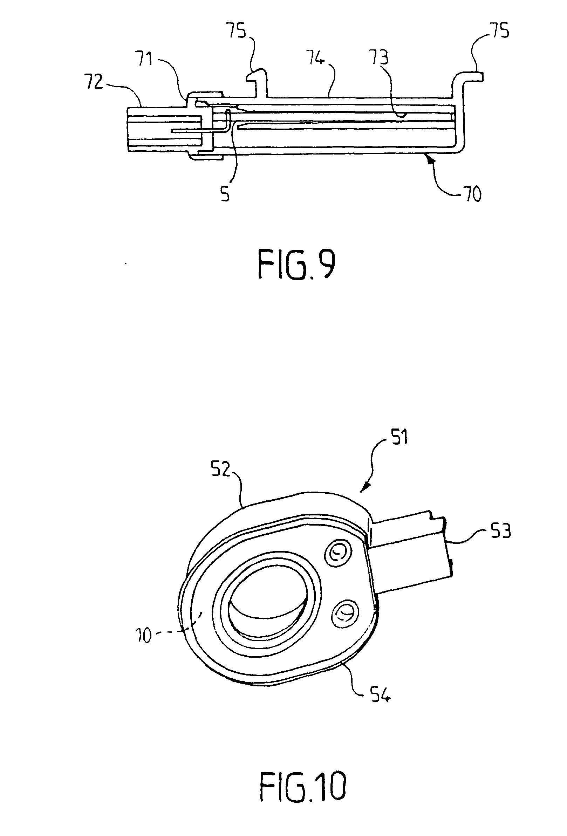

Le circuit résonnant 10 est inséré dans un boîtier 51, tel que cela est représenté sur la figure 10. Le boîtier 51 comporte une partie inférieure 52 qui a une forme sensiblement annulaire, adaptée aux enroulements de la bobine L1. La partie inférieure 52 est munie d'un connecteur 53 pour permettre la connexion des fils 40. Lorsque le circuit résonnant 10 a été disposé dans la partie inférieure 52, un couvercle 54, de forme correspondante, est soudé par vibration sur la partie inférieure 52, de manière que la partie inférieure 52 et son couvercle 54 forment un boîtier 51 étanche pour le circuit résonnant 10.

Le plancher 8 du véhicule 1 comportant généralement des parties métalliques, le circuit résonnant 10 est disposé à distance du plancher 8, pour éviter toute interférence nuisant à l'échange de signaux par induction avec le dispositif de réponse 5. La distance minimale entre le circuit résonnant 10 et le plancher 8 est par exemple de 6mm. Pour réaliser cet espacement, le circuit résonnant 10 est par exemple disposé dans les moyens de fixation du siège 4.

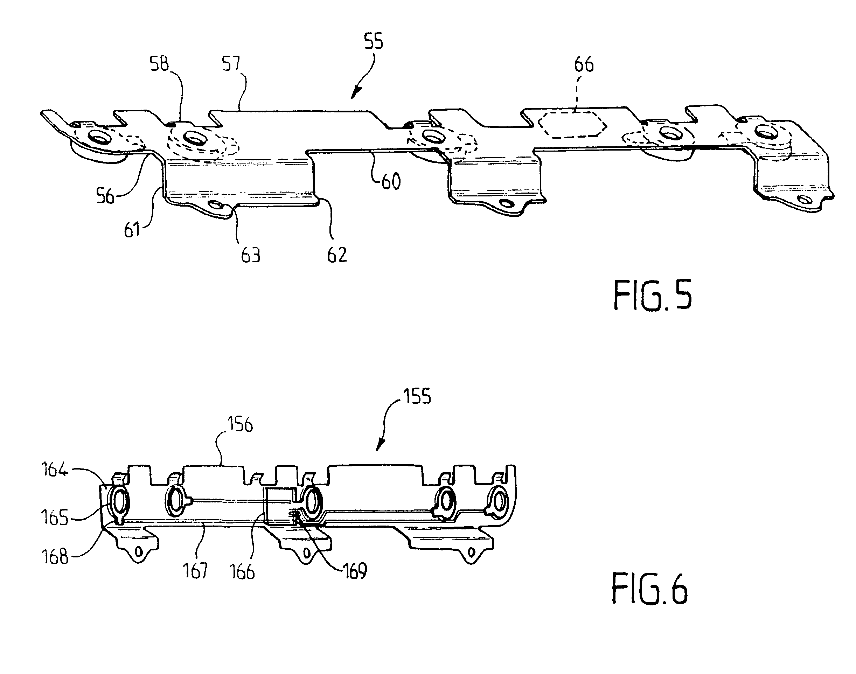

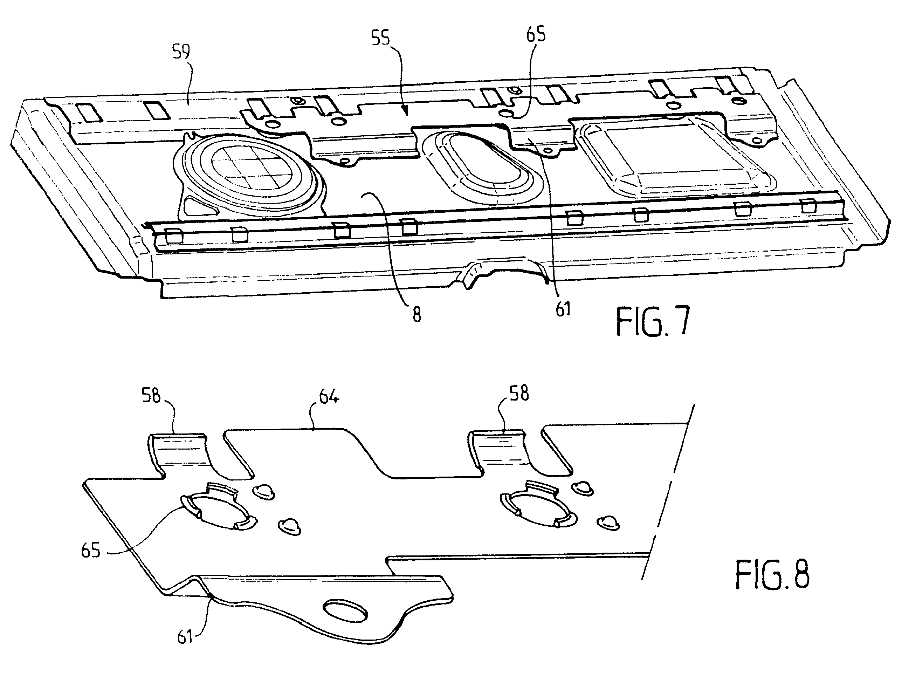

La figure 5 montre une traverse 55 pour l'intégration du dispositif d'interrogation 6 dans le véhicule 1. La traverse 55, qui est par exemple réalisée en plastique, comporte une partie plane 56, de forme globalement rectangulaire. La traverse 55 est disposée transversalement dans le véhicule 1, sous la rangée de siège. Pour cela, la traverse 55 comporte sur un de ses côtés 57 plusieurs éléments d'accrochage 58 en forme de crochet, par exemple six, qui sont accrochés sur un rail de guidage 59 (figure 7) monté sur le plancher 8, qui traverse transversalement le véhicule 1. Le rail de guidage 59 est par exemple un rail de guidage permettant la fixation des sièges, d'une manière connue en soi. Sur son côté 60 opposé, la traverse 55 comporte plusieurs éléments de fixation 61, par exemple 3, de section sensiblement en forme de L permettant de tenir la partie plane 56 à distance du plancher. La petite barre du L 62 de chaque élément de fixation 61 est sensiblement parallèle à la partie plane 56 et comporte un orifice 63 permettant le passage d'une vis (non représentée) pour la fixation de la traverse 55 au plancher 8.

La face inférieure 64 de la partie plane 56 comporte un moyen d'accrochage 65 (mieux visible sur la figure 8) pour le boîtier 51, l'accrochage étant par exemple réalisé par clipsage.

La face inférieure 64 comporte un moyen d'accrochage 66 pour le module de commande 7, de préférence situé à proximité du milieu de la traverse 55. De cette manière, la distance entre le module de commande 7 et le circuit résonnant 10 est réduite, par exemple inférieure à 1m, ce qui permet de limiter les pertes.

La figure 6 montre une variante de traverse d'intégration. La traverse 155 a globalement la même forme que la traverse 55 décrite précédemment et est réalisée en matière isolante. Ici, la face inférieure 164 de la partie plane 156 comporte des pistes électriques 167 surmoulées reliant un moyen d'accrochage 165 du circuit résonnant 10 et un moyen d'accrochage 166 du module de commande 7. Les moyens d'accrochage 165, 166 comportent chacun un connecteur 168 et 169 pour la connexion du circuit résonnant 10 et du module de commande 7, respectivement, avec les pistes 167. Dans ce cas, le circuit résonnant 10 n'est pas intégré dans un boîtier et le module de commande 7 est réalisé sous la forme d'une carte électronique (non représentée). Lorsque le circuit résonnant 10 et la carte électronique ont été accrochés aux moyens d'accrochage 165, 166 et connectés aux connecteurs 168, 169, ils sont recouverts par une résine, également appelée poting, qui permet d'assurer l'étanchéité du dispositif d'interrogation 6. Cette variante permet de supprimer les fils électriques 40 ainsi que les boîtiers plastiques du circuit résonnant et du module de commande, ce qui présente un intérêt économique, de poids, et permet de simplifier l'assemblage. En variante de la résine, des capots (non représentés) peuvent être soudés sur le circuit résonnant 10 et sur la carte électronique pour les protéger.

Le générateur de signal 12 (figure 3) est destiné à délivrer un signal carré à une fréquence porteuse Fp pour faire osciller le circuit résonnant 10 à la fréquence porteuse Fp. Le circuit résonnant 10 est sensiblement accordé sur la fréquence porteuse Fp de manière à émettre le signal porteur sous la forme d'un champ magnétique. Le module de commande 7 et tous ses composants sont alimentés par un circuit d'alimentation (non représenté) raccordé au module de commande 7.

Les moyens de traitement du signal comportent un démodulateur 13, connecté à une borne de prélèvement du signal 14, qui permet de démoduler un signal de réponse modulé en amplitude émis par le dispositif de réponse 5 à destination du dispositif d'interrogation 6, tel que cela sera décrit en détail plus loin. Le démodulateur 13 comporte un circuit détecteur d'enveloppe 16 ainsi que plusieurs étages de circuits à amplificateur opérationnel pour générer un signal carré image du signal de réponse et l'amplifier. Un tel démodulateur est connu en soi.

Une sortie 15 du démodulateur 13 est connectée à un moyen de décision (non représenté) du module de commande 7 destiné à déterminer, à partir de la fréquence du signal en sortie du démodulateur 13, l'état du capteur 3. Les informations relatives à l'état du capteur 3 sont ensuite récupérées par l'unité centrale 50 du véhicule, par exemple pour lui permettre de commander ou d'inhiber le déploiement de dispositifs de sécurité (non représentés).

En se référant à la figure 2, on va maintenant décrire plus en détail le dispositif de réponse 5. Le dispositif de réponse 5, également appelé transpondeur, est par exemple réalisé sous la forme d'un circuit intégré.

Le dispositif de réponse 5 comporte un circuit résonnant 20 comprenant une bobine L2, formant antenne magnétique, montée en parallèle d'un condensateur C2, la bobine L2 étant une bobine plate d'axe vertical H2. Le circuit résonnant 20 est destiné à capter un champ magnétique engendré par le circuit résonnant 10 du dispositif d'interrogation 6. Le circuit résonnant 20 est accordé sur la fréquence porteuse Fp. Cet accord a pour objet de maximiser la diffusion d'énergie vers le transpondeur 5.

Le circuit résonnant 20 est disposé sous l'assise du siège 4, de manière que l'axe H1 soit sensiblement confondu avec l'axe H2 et que les bobines L1 et L2 se trouvent à faible distance l'une de l'autre. On notera que, sur la figure 5, cinq moyens d'accrochage 65 ont été représentés, ce qui permet l'accrochage de cinq boîtiers de circuits résonnants 10. Dans ce cas particulier, la rangée de sièges comporte trois sièges, chaque siège comportant un capteur 3, le siège du milieu étant amovible. Trois moyens d'accrochage 65 sont disposés de manière que, en position normale, c'est-à-dire lorsque les trois sièges sont fixés sur le rail de guidage, chaque circuit résonnant 20 se trouve au droit d'un circuit résonnant 10 respectivement. Lorsque le siège du milieu est retiré, les sièges latéraux peuvent être déplacés le long du rail de guidage 59 vers le centre du véhicule. Dans cette position, pour que les circuits résonnants 20 des deux sièges latéraux puissent se trouver au droit de circuits résonnants 10, deux circuits résonnants 10 supplémentaires sont prévus. De manière plus générale, le nombre et la position des circuits résonnants 10 doivent être adaptés au nombre et à la position des sièges munis des dispositifs de réponse.

Le circuit intégré du dispositif de réponse 5 est de préférence inséré dans un boîtier 70 (figure 9). Le boîtier 70 a une forme sensiblement parallélépipédique et comporte sur une face 71 un connecteur 72 pour la connexion du transpondeur 5 avec le capteur 3. L'intérieur du boîtier 70 comporte un système de glissière 73 pour faciliter l'insertion du circuit intégré. La face supérieure 74 du boîtier 70 comporte des moyens de fixation 75 pour la fixation du boîtier 70 sous l'assise du siège 4. La distance entre les bobines L1 et L2 est par exemple inférieure à 25mm. Ainsi, la communication entre les dispositifs d'interrogation 6 et de réponse 5 peut utiliser des signaux de courte portée, ce qui d'une part est économique, et d'autre part permet d'éviter les interférences avec d'autres dispositifs du véhicule 1, par exemple d'autre dispositifs d'acquisition de l'état d'un capteur disposés dans d'autres sièges du véhicule 1. On notera que la portée d'un système à transpondeur, c'est-à-dire la distance maximale du dispositif d'interrogation à laquelle le transpondeur est activé, dépend, notamment, de la taille de l'antenne du transpondeur, de la fréquence d'excitation de la bobine du circuit résonnant engendrant le champ magnétique, de l'intensité de cette excitation, et de la consommation en puissance du transpondeur.

Dans l'exemple représenté, le capteur 3 comporte un interrupteur I1 apte à prendre deux états, un état ouvert et un état fermé, selon que la ceinture est attachée ou non. Par exemple, l'interrupteur I1 est dans l'état fermé lorsque la ceinture est attachée et dans l'état ouvert lorsque la ceinture est détachée, le contraire étant bien entendu possible.

Les bornes 23 et 24 du circuit résonnant 20 sont reliées à deux bornes d'entrée 25 et 26 d'un pont de diodes 27 d'un redresseur 30. Le pont de diode 27 comporte quatre diodes D1, D2, D3 et D4. L'anode de la diode D1 est connectée à la borne 23, de même que la cathode de la diode D3. L'anode de la diode D2 et la cathode de la diode D4 sont connectées à la borne 24. Le redresseur 30 comporte un condensateur C3 connecté aux bornes de sortie redressée 32,33 du pont de diodes 27 de façon à stocker de l'énergie et à lisser la tension redressée délivrée par le pont de diodes 27.

Le dispositif de réponse 5 comporte un oscillateur 28, dont un point C est relié à la borne de sortie 32 du redresseur 30. L'oscillateur 28 comporte deux transistors T1 et T2, les émetteurs des transistors T1 et T2 étant reliés à un potentiel commun, par exemple la masse. L'oscillateur 28 comporte deux condensateurs C4 et C5. Le condensateur C4 (respectivement C5) est relié à l'une de ses bornes au collecteur du transistor T1 (respectivement T2) et à sa borne opposée à la base du transistor T2 (respectivement T1). Lorsque l'oscillateur 28 est alimenté en courant de manière que le point C se trouve au potentiel V_{C}, les potentiels V_{A} et V_{B} des points A et B, qui correspondent aux collecteurs des transistors T1 et T2 respectivement, peuvent prendre deux valeurs qui valent environ 0V ou Vmax, avec Vmax≈V_{C}. En d'autres termes, soit V_{A}=0V et V_{B}=Vmax, soit V_{A}=Vmax et V_{B}=0V.

Lorsque VA = 0V et V_{B} = Vmax, et que les deux condensateurs C4 et C5 sont chargés, le transistor T1 est saturé par l'intermédiaire d'une résistance R3, et le transistor T2 est bloqué, car sa tension base-émetteur Vbe₂ est négative du fait que le condensateur C4 est chargé. Lorsque le condensateur C4 se décharge dans une résistance R2, la tension base-émetteur Vbe₂ diminue jusqu'à redevenir positive, ce qui a pour effet que le transistor T2 se sature, c'est-à-dire que V_{B} devient égal à 0V.

A ce moment, la tension base-émetteur Vbe₁ du transistor T1 devient négative, donc le transistor T1 se bloque, c'est-à-dire que VA devient égal à Vmax. Dans ce cas, le condensateur C4 se charge.

Simultanément, le condensateur C5 se décharge, et la tension Vbe₁ diminue jusqu'à redevenir positive, ce qui a pour effet la saturation du transistor T1, c'est-à-dire que VA devient égal à 0V. Ce cycle se répète ensuite de manière similaire. Ce circuit constitue donc un oscillateur périodique.

Le temps de charge d'un condensateur, donc la fréquence des cycles, dépend notamment de la valeur de la résistance équivalente Req entre les points D et E.

L'interrupteur T1 est connecté entre les points D et E, en parallèle avec la résistance R3, de manière que la résistance R3 est contournée lorsque l'interrupteur I1 est fermé. Ainsi, en fonction de l'état de l'interrupteur I1, la résistance équivalente Req peut prendre deux valeurs différentes prédéterminées Req1 et Req2. Lorsqu'il est alimenté en énergie par l'intermédiaire du redresseur 30, l'oscillateur 28 génère donc un signal de réponse de fréquence prédéterminée F1 ou F2, selon que Req=Req1 ou Req=Req2, respectivement. En d'autres termes, la fréquence du signal de réponse est par exemple égale à F1 lorsque l'interrupteur I1 est dans un état ouvert et égale à F2 lorsque l'interrupteur I1 est dans un état fermé, avec F1≠F2.

Le dispositif de réponse 5 comporte un modulateur 29, pour moduler le signal porteur qu'il reçoit depuis le circuit résonnant 10 par le signal de réponse. Le modulateur 29 comporte un interrupteur électronique, par exemple un transistor T3, commandé à la fréquence du signal de réponse, tel que cela sera décrit en détail plus loin.

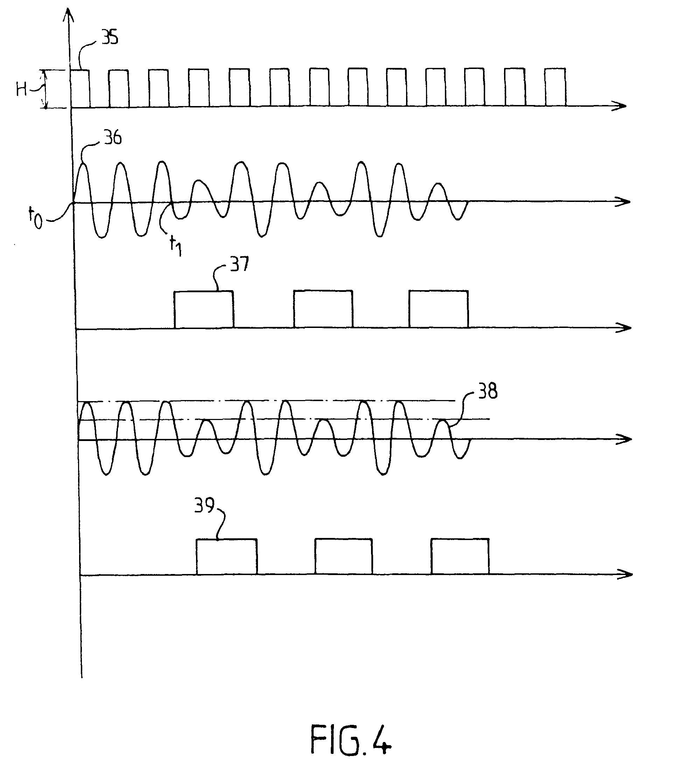

En se référant à la figure 4, on va maintenant décrire un processus d'acquisition de l'état du capteur 3 à l'aide du dispositif d'acquisition 2.

Le signal porteur carré à la fréquence porteuse Fp généré par le générateur 12 est représenté sur la courbe 35. Le signal porteur carré alimente le circuit résonnant 10 qui émet un signal porteur à la fréquence porteuse Fp à destination du transpondeur 5. Le signal porteur est représenté sur la courbe 36, qui représente en fait le courant dans la bobine L1. On notera que pendant toute la durée de la communication entre le dispositif d'interrogation 6 et le transpondeur 5, le générateur 12 maintient constante l'amplitude M du signal porteur carré.

Lorsque le transpondeur 5 se trouve dans le champ du dispositif d'interrogation 6, c'est-à-dire à une distance inférieure à la distance maximale dmax d'activation du transpondeur, ce qui correspond au cas où le siège 4 est en position d'utilisation, un courant induit à la fréquence porteuse Fp est engendrée par couplage inductif aux bornes du circuit résonnant 20. Ce courant, redressée par le redresseur 30, fournit une tension d'alimentation à l'oscillateur 28. Le signal porteur sert donc de source d'énergie pour activer le transpondeur 5. Ainsi, le transpondeur 5 ne nécessite pas l'utilisation d'une batterie séparée. On notera qu'une variante avec batterie est néanmoins possible.

Lorsqu'il est alimenté, l'oscillateur 28 commence à osciller à une fréquence F dépendant de l'état de l'interrupteur I1. Si l'interrupteur I1 est dans un état ouvert, F=F1, et si l'interrupteur I1 est dans un état fermé, F=F2. Le signal de réponse carré généré au niveau de la sortie B de l'oscillateur 28 est représenté sur la courbe 37.

La sortie B de l'oscillateur 28 est connectée au transistor T3 et permet de commander le transistor T3. Lorsque le transistor T3 est saturé, c'est-à-dire qu'il se comporte comme un interrupteur fermé, le circuit résonnant 20 du transpondeur 5 est soumis à un amortissement supplémentaire, de sorte que le transpondeur 5 prélève une quantité d'énergie plus importante du champ magnétique fourni par le dispositif d'interrogation 6. La variation d'énergie du transpondeur 5 se traduit par une variation d'amplitude du courant traversant la bobine L2, donc du courant traversant la bobine L1, car les deux bobines L1 et L2 sont couplées.

Le signal modulé en amplitude émis par le transpondeur 5 est représenté sur la courbe 38, qui représente en fait le courant dans la bobine L2. Sur la figure 4, la courbe 37 représente le signal de réponse à une fréquence donnée, par exemple la fréquence F=F1. La courbe 38, qui représente le signal de réponse modulé, correspond dans ce cas à un signal de réponse de fréquence F=F1. Il est bien évident que, si le signal de réponse a une fréquence F=F2, le signal de réponse modulé est modifié en conséquence. Ainsi, de l'instant initial t0 du déclenchement du générateur 12 jusqu'à un instant t1, qui correspond au temps de réponse du transpondeur 5, les bobines L1 et L2 oscillent à la fréquence porteuse Fp et à l'amplitude fixé par le générateur 12, puis, à partir de l'instant t1, les bobines L1 et L2 oscillent à la fréquence porteuse modulée en amplitude par le signal de réponse généré par l'oscillateur 28. Le déclenchement du générateur 12 est commandé par le module de commande 7 de manière périodique, par exemple toutes les 100 µs.

Le signal modulé est reçu par le démodulateur 13 du dispositif d'interrogation 6. La sortie 15 du démodulateur 13 transmet alors un signal image du signal de réponse, représenté sur la courbe 39, au module de décision, qui détermine l'état du capteur 3, par exemple en comparant la fréquence du signal image, c'est-à-dire F1 ou F2, avec un seuil. Ainsi, l'unité centrale de commande 50 dispose, par le biais du module de commande 7, d'une information relative à l'utilisation ou non de la ceinture du siège 4. De cette manière, en cas d'accident, l'unité centrale 50 peut décider de commander ou d'inhiber le déploiement de l'airbag en fonction de l'état de la ceinture. Par exemple, le déploiement de l'airbag associé au siège 4 est inhibé lorsque l'état du capteur 3 indique que la ceinture correspondante n'est pas attachée.

D'autres variantes sont possibles, par exemple, lorsque le siège 4 comporte plusieurs boucles de ceinture, ce qui est le cas par exemple d'un siège situé au milieu du véhicule, qui comporte une boucle pour la ceinture du milieu et une boucle pour une ceinture d'un des sièges adjacent, le capteur 3 peut comporter plusieurs interrupteurs, un interrupteur étant disposé dans chaque boucle de ceinture respectivement. Sur la figure 2, un interrupteur supplémentaire I2 branché en parallèle d'une résistance supplémentaire R2 ont été représentés en trait interrompu. Dans ce cas, la résistance équivalente Req entre les bornes D et E a pour valeur Req1 lorsque l'interrupteur I2 est fermé et que l'interrupteur I1 est ouvert, Req2 lorsque l'interrupteur 12 est fermé et que l'interrupteur I1 est fermé, Req3 lorsque l'interrupteur 12 est ouvert et que l'interrupteur I1 est fermé, et Req4 lorsque l'interrupteur I2 est fermé et que l'interrupteur I1 est ouvert avec des valeurs Req1, Req2, Req3 et Req4 toutes différentes les unes des autres. Le processus d'acquisition de l'état du capteur 3 est similaire au cas décrit précédemment, le module de décision comparant par exemple la fréquence du signal en sortie 15 du démodulateur 13 avec plusieurs seuils pour déterminer l'état du capteur. De manière générale, le capteur 3 peut comporter une nombre quelconque d'interrupteurs, les interrupteurs étant disposés dans des boucles de ceinture ou ailleurs dans le siège 4, la fréquence du signal de réponse permettant de déterminer les interrupteurs ouverts et fermés.

Le mode de réalisation décrit ci-dessus peut être implémenté avec d'autres capteurs, par exemple un capteur d'occupation du siège sous la forme d'un interrupteur sensible à la présence ou à l'absence d'une pression sur l'assise du siège.

L'unité centrale 50 peut être connecté à des moyens d'alerte, par exemple des moyens d'alerte lumineux disposés sur le tableau de bord du véhicule 1, indiquant pour chaque ceinture si elle est attachée ou non.

Les schémas électriques détaillés des figures ne constituent que des exemples illustratifs. Le redresseur 30 peut être remplacé par un redresseur de tout type. En outre, le transpondeur 5 peut comporter une batterie interne, le redresseur n'étant pas indispensable dans ce cas.

La modulation d'amplitude est bien adaptée à ce type d'application car elle est simple à mettre en oeuvre, cependant d'autres types de modulation peuvent être mis en oeuvre pour la transmission du signal de réponse, par exemple une modulation de phase ou de fréquence. Ainsi, le modulateur 29 peut être remplacé par un modulateur d'un autre type, le démodulateur 13 étant un démodulateur correspondant.

Le dispositif 2 peut être utilisé pour diverses applications mises en oeuvre par la transmission de données entre un siège et le plancher du véhicule.

Par exemple, le dispositif 2 peut être utilisé pour permettre la détection automatique d'un siège bébé disposé sur le siège du véhicule, par exemple à l'aide d'un capteur sensible à la pression disposé dans l'assise du siège de véhicule. Cette détection sera traitée au niveau de l'unité centrale 50 pour inhiber l'airbag.

Une autre application possible consiste à transmettre des informations sur un état d'un siège chauffant, par exemple sur sa température, lorsqu'un capteur de température est disposé dans le siège. Cette information de température peut être utilisée pour réguler les moyens de chauffage, afficher l'information, ou autres usages.

## Revendications

1. Dispositif d'acquisition (2) de l'état d'un capteur d'un siège de véhicule comportant:
- un dispositif d'interrogation (6) agencé dans ledit véhicule (1), ledit dispositif d'interrogation comprenant un générateur (12) de signal porteur apte à générer un signal porteur à une fréquence porteuse (Fp) prédéterminée, et un premier composant inductif (10), connecté audit générateur de signal porteur, apte à émettre ledit signal porteur, et
- un dispositif de réponse (5) agencé sous un siège (4) dudit véhicule comprenant un second composant inductif (20), apte à recevoir ledit signal porteur par couplage inductif avec ledit premier composant inductif, un générateur de signal de réponse (28) connecté audit deuxième composant inductif, apte à générer un signal de réponse en réponse à la réception dudit signal porteur, et un modulateur (29) connecté audit générateur de réponse apte à moduler ledit signal porteur par ledit signal de réponse pour transmettre ledit signal porteur modulé par le signal de réponse au dispositif d'interrogation par couplage inductif entre le deuxième composant inductif et le premier composant inductif,
ledit dispositif de réponse étant relié à un capteur (3) apte à détecter une information relative au siège, ledit générateur de réponse étant apte à modifier une caractéristique dudit signal de réponse en fonction de l'information détectée par ledit capteur, ledit dispositif d'interrogation comprenant un démodulateur (13) pour démoduler ledit signal de réponse, et un dispositif de traitement apte à déterminer ladite information à partir de ladite caractéristique dudit signal de réponse, **caractérisé en ce que** ladite traverse (55,155) est réalisée en matière plastique, et **en ce que** ladite traverse (55,155) est réalisée en matière plastique.

2. Dispositif selon la revendication 1, **caractérisé en ce que** ledit premier composant inductif (10) est disposé à distance du plancher dudit véhicule.

3. Dispositif selon la revendication 2, **caractérisé en ce que** la distance entre ledit premier composant inductif (10) et ledit plancher est au moins égale à 6mm. fréquence réglable et est apte à modifier la fréquence (F1, F2) dudit signal de réponse en fonction de l'état dudit capteur (3).

4. Dispositif selon l'une quelconque des revendications 1 à 3, **caractérisé en ce que** ledit dispositif de réponse (5) comporte un redresseur (30) pour alimenter ledit générateur de signal de réponse (28) à partir dudit signal porteur.

5. Dispositif selon l'une quelconque des revendications 1 à 4, **caractérisé en ce** ledit générateur de signal de réponse (28) comporte un oscillateur à dispositif de traitement, ledit module de commande étant fixé à ladite traverse.

6. Dispositif selon l'une quelconque des revendications 1 à 5, **caractérisé en ce que** ledit capteur (3) est un interrupteur (Il), ledit générateur de signal de réponse (28) étant apte à produire un signal de réponse comprenant une première valeur caractéristique prédéterminée lorsque ledit interrupteur est dans un état ouvert et à produire un signal de réponse comprenant une deuxième valeur caractéristique prédéterminée, différente de ladite première valeur caractéristique prédéterminée, lorsque ledit interrupteur est dans un état fermé.

7. Dispositif selon la revendication 6, **caractérisé en ce que** ledit interrupteur (I1) est disposé dans une boucle de ceinture, l'interrupteur étant apte à prendre un premier état lorsque la ceinture est attachée et un deuxième état lorsque la ceinture n'est pas attachée.

8. Dispositif selon la revendication 7, **caractérisé en ce que** ledit capteur (3) comporte plusieurs interrupteurs (I1, I2), chaque interrupteur étant disposé dans une boucle de ceinture respectivement.

9. Dispositif selon l'une quelconque des revendications 1 à 6, **caractérisé en ce que** ledit capteur (3) est un capteur d'occupation du siège sensible au poids.

10. Dispositif selon l'une quelconque des revendications 1 à 9, **caractérisé en ce que** ledit modulateur (29) est apte à moduler en amplitude ledit signal porteur par ledit signal de réponse.

11. Dispositif selon l'une quelconque des revendications 1 à 10, **caractérisé en ce que** la portée dudit signal porteur est inférieure à 10cm.

12. Dispositif selon l'une quelconque des revendications 1 à 11, **caractérisé en ce que** ledit dispositif de réponse (5) est agencé sous le siège (4) dudit véhicule (1), ledit premier composant inductif (10) étant agencé sous le siège du véhicule, la distance entre ledit premier composant inductif et ledit deuxième composant inductif (20) étant inférieure à 10 cm, de préférence inférieure à 2,5cm.

13. Dispositif selon la revendication 12, **caractérisé en ce que** la distance entre ledit premier composant inductif (10) et ledit plancher est supérieure à 5 mm.

14. Dispositif selon l'une quelconque des revendications 1 à 13, **caractérisé en ce que** ledit premier composant inductif (10) comporte un enroulement d'axe vertical (H1) par rapport audit véhicule, ledit deuxième composant inductif (20) comportant un enroulement d'axe vertical (H2) par rapport audit véhicule, les axes verticaux desdits premier et deuxième composants inductifs étant sensiblement confondus.

15. Dispositif selon l'une quelconque des revendications 1 à 14, **caractérisé en ce que** ledit véhicule comporte une unité centrale de commande (50) apte à communiquer avec ledit dispositif de traitement pour commander le déploiement d'un dispositif de sécurité du véhicule en fonction de l'état de service du siège.

16. Dispositif selon la revendication 15, **caractérisé en ce que** ladite unité centrale de commande (50) est apte à inhiber le déploiement d'un sac gonflable associé audit siège lorsque ledit capteur (3) détecte un état de service dudit siège (4) dans lequel ledit siège n'est pas occupé ou dans lequel une ceinture de sécurité dudit siège n'est pas attachée.

17. Dispositif selon l'une quelconque des revendication 1 à 16, **caractérisé en ce que** ledit dispositif de réponse (5) est réalisé sous la forme d'un circuit intégré, ledit circuit intégré étant inséré dans un boîtier (70), ledit boîtier comportant un connecteur (72) pour permettre la connexion dudit dispositif de réponse avec ledit capteur (3), ledit boîtier comportant des moyens de fixation (75) pour la fixation dudit boîtier sous ledit siège (4).

18. Dispositif selon la revendication 17, **caractérisé en ce qu**'il comprend un module de commande (7), ledit module de commande incluant ledit générateur (12), ledit démodulateur (13) et ledit

19. Dispositif selon la revendication 18, **caractérisé en ce que** ledit module de commande (7) est inséré dans un boîtier étanche, ledit premier composant inductif (10) étant inséré dans un boîtier (51) étanche, lesdits boîtiers étant accrochés à ladite traverse.

20. Dispositif selon la revendication 18, **caractérisé en ce que** ledit module de commande (7) est réalisé sous la forme d'un circuit intégré, ledit module de commande et ledit premier composant inductif (10) étant accrochés à ladite traverse et étant recouverts d'une résine pour assurer l'étanchéité dudit dispositif d'interrogation.

## Claims

1. Device (2) for the acquisition of the state of a sensor of a vehicle seat comprising:
- an interrogation device (6) arranged in the said vehicle (1), the said interrogation device comprising a carrier signal generator (12) able to generate a carrier signal at a predetermined carrier frequency (Fp), and a first inductive component (10), connected to the said carrier signal generator, able to emit the said carrier signal, and
- a response device (5) arranged under a seat (4) of the said vehicle comprising a second inductive component (20), able to receive the said carrier signal by inductive coupling with the said first inductive component, a response signal generator (28) connected to the said second inductive component, able to generate a response signal in response to the reception of the said carrier signal, and a modulator (29) connected to the said response generator able to modulate the said carrier signal by the said response signal so as to transmit the said carrier signal modulated by the response signal to the interrogation device by inductive coupling between the second inductive component and the first inductive component, the said response device being linked to a sensor (3) able to detect an information cue relating to the seat, the said response generator being able to modify a characteristic of the said response signal as a function of the information cue detected by the said sensor, the said interrogation device comprising a demodulator (13) for demodulating the said response signal, and a processing device able to determine the said information cue on the basis of the said characteristic of the said response signal, **characterized in that** the said first inductive component (10) is fixed to a cross member (55, 155), the said cross member being fixed to the floor (8) of the said vehicle, the said cross member comprising attachment means (65, 165) for attaching the said first inductive component (10), and **in that** the said cross member (55, 155) is made of plastic.

2. Device according to Claim 1, **characterized in that** the said first inductive component (10) is disposed some distance from the floor of the said vehicle.

3. Device according to Claim 2, **characterized in that** the distance between the said first inductive component (10) and the said floor is at least equal to 6 mm.

4. Device according to any one of Claims 1 to 3, **characterized in that** the said response device (5) comprises a rectifier (30) for powering the said response signal generator (28) on the basis of the said carrier signal.

5. Device according to any one of Claims 1 to 4, **characterized in that** the said response signal generator (28) comprises an adjustable-frequency oscillator and is able to modify the frequency (F1, F2) of the said response signal as a function of the state of the said sensor (3).

6. Device according to any one of Claims 1 to 5, **characterized in that** the said sensor (3) is a breaker (I1), the said response signal generator (28) being able to produce a response signal comprising a first predetermined characteristic value when the said breaker is in an open state and to produce a response signal comprising a second predetermined characteristic value, different from the said first predetermined characteristic value, when the said breaker is in a closed state.

7. Device according to Claim 6, **characterized in that** the said breaker (I1) is disposed in a belt buckle, the breaker being able to take a first state when the belt is fastened and a second state when the belt is not fastened.

8. Device according to Claim 7, **characterized in that** the said sensor (3) comprises several breakers (I1, 12), each breaker being disposed in a belt buckle respectively.

9. Device according to any one of Claims 1 to 6, **characterized in that** the said sensor (3) is a weight sensitive seat occupancy sensor.

10. Device according to any one of Claims 1 to 9, **characterized in that** the said modulator (29) is able to amplitude modulate the said carrier signal by the said response signal.

11. Device according to any one of Claims 1 to 10, **characterized in that** the range of the said carrier signal is less than 10 cm.

12. Device according to any one of Claims 1 to 11, **characterized in that** the said response device (5) is arranged under the seat (4) of the said vehicle (1), the said first inductive component (10) being arranged under the seat of the vehicle, the distance between the said first inductive component and the said second inductive component (20) being less than 10 cm, preferably less than 2.5 cm.

13. Device according to Claim 12, **characterized in that** the distance between the said first inductive component (10) and the said floor is greater than 5 mm.

14. Device according to any one of Claims 1 to 13, **characterized in that** the said first inductive component (10) comprises a winding with vertical axis (H1) with respect to the said vehicle, the said second inductive component (20) comprising a winding with vertical axis (H2) with respect to the said vehicle, the vertical axes of the said first and second inductive components being substantially one and the same.

15. Device according to any one of Claims 1 to 14, **characterized in that** the said vehicle comprises a central control unit (50) able to communicate with the said processing device so as to control the deployment of a safety device of the vehicle as a function of the service state of the seat.

16. Device according to Claim 15, **characterized in that** the said central control unit (50) is able to disable the deployment of an inflatable airbag associated with the said seat when the said sensor (3) detects a service state of the said seat (4) in which the said seat is not occupied or in which a safety belt of the said seat is not fastened.

17. Device according to any one of Claims 1 to 16, **characterized in that** the said response device (5) is embodied in the form of an integrated circuit, the said integrated circuit being inserted into a housing (70), the said housing comprising a connector (72) for allowing the connection of the said response device with the said sensor (3), the said housing comprising fixing means (75) for fixing the said housing under the said seat (4).

18. Device according to Claim 1, **characterized in that** it comprises a control module (7), the said control module including the said generator (12), the said demodulator (13) and the said processing device, the said control module being fixed to the said cross member.

19. Device according to Claim 18, **characterized in that** the said control module (7) is inserted into a leaktight housing, the said first inductive component (10) being inserted into a leaktight housing (51), the said housings being attached to the said cross member.

20. Device according to Claim 18, **characterized in that** the said control module (7) is embodied in the form of an integrated circuit, the said control module and the said first inductive component (10) being attached to the said cross member and being covered with a resin to ensure the leaktightness of the said interrogation device.

## Patentansprüche

1. Vorrichtung (2) zur Erfassung des Zustands eines Sensors eines Fahrzeugsitzes, welche aufweist:
- eine in dem Fahrzeug (1) angeordnete Abfrageeinrichtung (6), wobei die Abfrageeinrichtung einen Trägersignalgenerator (12), der ein Trägersignal mit einer vorgegebenen Trägerfrequenz (Fp) erzeugen kann, und ein erstes induktives Bauelement (10), welches mit dem Trägersignalgenerator verbunden ist und das Trägersignal aussenden kann, umfasst, und
- eine unter einem Sitz (4) des Fahrzeugs angeordnete Antworteinrichtung (5), die ein zweites induktives Bauelement (20), welches das Trägersignal durch induktive Koppelung mit dem ersten induktiven Bauelement empfangen kann, einen Antwortsignalgenerator (28), der mit dem zweiten induktiven Bauelement verbunden ist und als Antwort auf den Empfang des Trägersignals ein Antwortsignal erzeugen kann, und einen Modulator (29) umfasst, der mit dem Antwortgenerator verbunden ist und das Trägersignal mit dem Antwortsignal modulieren kann, um das modulierte Trägersignal über das Antwortsignal mittels induktiver Koppelung zwischen dem zweiten induktiven Bauteil und dem ersten induktiven Bauteil an die Abfrageeinrichtung zu übertragen,
wobei die Antworteinrichtung mit einem Sensor (3) verbunden ist, der eine den Sitz betreffende Information detektieren kann, wobei der Antwortgenerator eine Eigenschaft des Antwortsignals in Abhängigkeit von der durch den Sensor detektierten Information modifizieren kann, wobei die Abfragevorrichtung einen Demodulator (13) zur Demodulierung des Antwortsignals und eine Verarbeitungseinrichtung zur Ermittlung der Information an Hand der Eigenschaft des Antwortsignals umfasst, **dadurch gekennzeichnet, dass** das erste induktive Bauelement (10) an einem Querträger (55, 155) befestigt ist, wobei der Querträger auf dem Boden (8) des Fahrzeugs befestigt ist, wobei die Querstrebe Rastmittel (65, 165) zur Befestigung des ersten induktiven Bauelements (10) aufweist, und **dadurch**, dass die Querstrebe (55, 155) aus Kunststoff besteht.

2. Vorrichtung gemäß Anspruch 1, **dadurch gekennzeichnet, dass** das erste induktive Bauelement (10) von dem Boden des Fahrzeugs beabstandet angeordnet ist.

3. Vorrichtung gemäß Anspruch 2, **dadurch gekennzeichnet, dass** der Abstand zwischen dem ersten induktiven Bauelement (10) und dem Boden wenigstens 6 mm beträgt.

4. Vorrichtung gemäß einem der Ansprüche 1 bis 3, **dadurch gekennzeichnet, dass** die Antworteinrichtung (5) einen Gleichrichter (30) aufweist, um den Antwortsignalgenerator (28) an Hand des Trägersignals zu versorgen.

5. Vorrichtung gemäß einem der Ansprüche 1 bis 4, **dadurch gekennzeichnet, dass** der Antwortsignalgenerator (28) einen Oszillator mit regelbarer Frequenz aufweist und in der Lage ist, die Frequenz (F1, F2) des Antwortsignals in Abhängigkeit vom Zustand des Sensors (3) zu modifizieren.

6. Vorrichtung gemäß einem der Ansprüche 1 bis 5, **dadurch gekennzeichnet, dass** der Sensor (3) ein Unterbrecher (11) ist, wobei der Antwortsignalgenerator (28) in der Lage ist, ein Antwortsignal mit einem ersten vorgegebenen charakteristischen Wert zu erzeugen, wenn sich der Unterbrecher in einem offenen Zustand befindet, und ein Antwortsignal mit einem zweiten vorgegebenen charakteristischen Wert zu erzeugen, der von dem ersten vorgegebenen charakteristischen Wert verschieden ist, wenn sich der Unterbrecher in einem geschlossenen Zustand befindet.

7. Vorrichtung gemäß Anspruch 6, **dadurch gekennzeichnet, dass** der Unterbrecher (11) in einer Gurtschlaufe angeordnet ist, wobei der Unterbrecher einen ersten Zustand einnehmen kann, wenn der Gurt geschlossen ist, und einen zweiten Zustand, wenn der Gurt nicht geschlossen ist.

8. Vorrichtung gemäß Anspruch 7, **dadurch gekennzeichnet, dass** der Sensor (3) mehrere Unterbrecher (11, 12) aufweist, wobei jeder Unterbrecher in einer entsprechenden Gurtschlaufe angeordnet ist.

9. Vorrichtung gemäß einem der Ansprüche 1 bis 6, **dadurch gekennzeichnet, dass** der Sensor (3) ein auf das Körpergewicht ansprechender Sitzbelegungssensor ist.

10. Vorrichtung gemäß einem der Ansprüche 1 bis 9, **dadurch gekennzeichnet, dass** der Modulator (29) das Trägersignal mit dem Antwortsignal amplitudenmodulieren kann.

11. Vorrichtung gemäß einem der Ansprüche 1 bis 10, **dadurch gekennzeichnet, dass** die Reichweite des Trägersignals kleiner als 10 cm ist.

12. Vorrichtung gemäß einem der Ansprüche 1 bis 11, **dadurch gekennzeichnet, dass** die Antworteinrichtung (5) unter dem Sitz (4) des Fahrzeugs (1) angeordnet ist, wobei das erste induktive Bauelement (10) unter dem Sitz des Fahrzeugs angeordnet ist und der Abstand zwischen dem ersten induktiven Bauelement und dem zweiten induktiven Bauelement (20) weniger als 10 cm, vorzugsweise weniger als 2,5 cm beträgt.

13. Vorrichtung gemäß Anspruch 12, **dadurch gekennzeichnet, dass** der Abstand zwischen dem ersten induktiven Bauelement (10) und dem Boden mehr als 5 mm beträgt.

14. Vorrichtung gemäß einem der Ansprüche 1 bis 13, **dadurch gekennzeichnet, dass** das erste induktive Bauelement (10) eine Wicklung mit einer bezogen auf das Fahrzeug vertikalen Achse (H1) aufweist, während das zweite induktive Bauelement (20) eine bezogen auf das Fahrzeug vertikale Achse (H2) aufweist, wobei die vertikalen Achsen der ersten und zweiten induktiven Bauelemente im Wesentlichen zusammenfallen.

15. Vorrichtung gemäß einem der Ansprüche 1 bis 14, **dadurch gekennzeichnet, dass** das Fahrzeug eine zentrale Steuereinheit (50) aufweist, die mit der Verarbeitungseinrichtung kommunizieren kann, um die Auslösung einer Sicherheitseinrichtung des Fahrzeugs in Abhängigkeit von dem Betriebszustand des Sitzes zu steuern.

16. Vorrichtung gemäß Anspruch 15, **dadurch gekennzeichnet, dass** die zentrale Steuereinheit (50) die Auslösung eines dem Sitz zugeordneten Airbags verhindern kann, wenn der Sensor (3) einen Betriebszustand des Sitzes (4) detektiert, in welchem der Sitz nicht belegt ist oder in welchem ein Sicherheitsgurt des Sitzes nicht angelegt ist.

17. Vorrichtung gemäß einem der Ansprüche 1 bis 16, **dadurch gekennzeichnet, dass** die Antworteinrichtung (5) in Form einer integrierten Schaltung verwirklicht ist, wobei die integrierte Schaltung in einem Gehäuse (70) eingebaut ist, wobei das Gehäuse eine Steckverbindung (72) aufweist, um die Verbindung der Antworteinrichtung mit dem Sensor (3) zu ermöglichen, wobei das Gehäuse Befestigungsmittel (75) zur Befestigung des Gehäuses unter dem Sitz (4) aufweist.

18. Vorrichtung gemäß Anspruch 17, **dadurch gekennzeichnet, dass** sie ein Steuerungsmodul (7) umfasst, wobei das Steuerungsmodul den Generator (12), den Demodulator (13) und die Verarbeitungseinrichtung enthält und wobei das Steuerungsmodul auf der Querstrebe befestigt ist.

19. Vorrichtung gemäß Anspruch 18, **dadurch gekennzeichnet, dass** das Steuerungsmodul (7) in einem dichten Gehäuse eingebaut ist und das erste induktive Bauteil (10) in einem dichten Gehäuse (51) eingebaut ist, wobei die Gehäuse auf der Querstrebe montiert sind.

20. Vorrichtung gemäß Anspruch 18, **dadurch gekennzeichnet, dass** das Steuerungsmodul (7) als integrierte Schaltung verwirklicht ist, wobei das Steuerungsmodul und das erste induktive Bauelement (10) auf der Querstrebe montiert und mit einem Harz bedeckt sind, um die Abdichtung der Abfrageeinrichtung zu gewährleisten.
